# EUROPÄISCHE PATENTSCHRIFT

(11) **EP 2 498 577 B1**
(45) Veröffentlichungstag und Bekanntmachung des Hinweises auf die Patenterteilung: **25.10.2017**
(21) Anmeldenummer: 12156363.9
(22) Anmeldetag: 21.02.2012
(51) Int. Cl.: H05B 6/12

(54) **Anordnung für ein Kochfeld sowie Induktionskochfeld mit einer entsprechenden Anordnung**
Assembly for a hob and induction hob with such an assembly
Agencement pour un champ de cuisson ainsi que champ de cuisson à induction doté d'un agencement correspondant

(30) Priorität: 10.03.2011 ES 201130326
(43) Veröffentlichungstag der Anmeldung: 12.09.2012
(73) Patentinhaber: BSH Hausgeräte GmbH, 81739 München (DE)
(72) Erfinder: Anton Falcon, Daniel, 50010 Zaragoza (ES); Ortiz Sainz, David, 50298 Pinseque (Zaragoza) (ES); Pina Gadea, Carmelo, 50008 Zaragoza (ES); Valencia Betran, María, 50010 Zaragoza (ES)

(56) Entgegenhaltungen:
- EP-A2- 2 256 416
- DE-U1- 7 702 615
- DE-U1-202004 008 515

## Beschreibung

Die Erfindung betrifft eine Anordnung für ein Kochfeld, mit einer Trägerplatte zur Aufnahme des mit Elektronikkomponenten bestückten Schaltungsträgers und mit einer unter der Trägerplatte angeordneten Bodenabdeckung. Des Weiteren betrifft die Erfindung ein Induktionskochfeld mit einer entsprechenden Anordnung.

Bei bekannten Induktionskochfeldern ist unter einer Kochfeldplatte, die beispielsweise aus Glaskeramik ausgebildet sein kann, eine wannenartige Aufnahme mit einer Bodenabdeckung ausgebildet. In dieser wannenartigen Aufnahme sind die Induktoren des Induktionskochfelds sowie ein Schaltungsträger, der die Leistungselektronik trägt, aufgenommen. Dieser Schaltungsträger ist auf einer Trägerplatte angeordnet, die wiederum an der Bodenabdeckung befestigt ist.

Die Bodenabdeckung ist üblicherweise aus Metall ausgebildet, wobei die Trägerplatte üblicherweise aus Kunststoff ausgebildet ist.

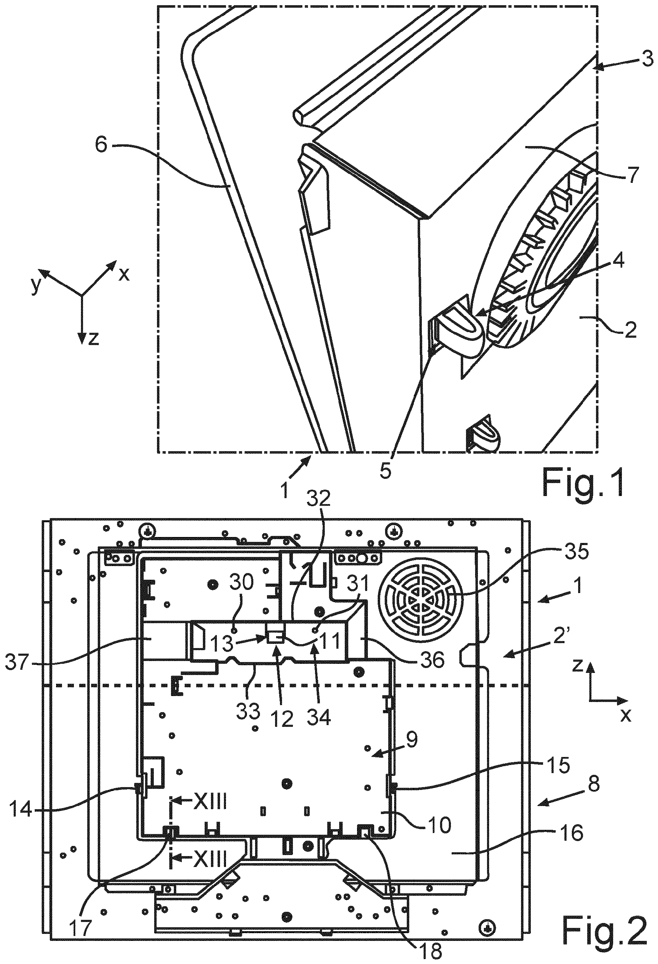

Wie beispielsweise aus der Darstellung in Fig. 1, die einen perspektivischen Teilausschnitt eines bekannten Induktionskochfelds 1 zeigt, zu erkennen ist, wird die Verbindung zwischen der Bodenabdeckung 2 des Induktionskochfelds 1 und der in der wannenartigen Aufnahme 3, die die Bodenabdeckung 2 umfasst, aufgenommenen Trägerplatte mittels Schnappelementen 4 erreicht. Dabei ist in der Bodenabdeckung 2 eine Durchbrechung 5 ausgebildet und das Schnappelement 4 erstreckt sich vom Inneren durch diese Öffnung 5 nach außen und steht nach hinten über, wie dies im zusammengesetzten Zustand gemäß der Darstellung in Fig. 1 gezeigt ist. Durch eine derartige Ausführung wird somit ein nach unten relativ weit überstehendes Verbindungselement erzeugt, welches im Hinblick auf die Bauhöhe des Kochfelds nachteilig ist. In Fig. 1 ist darüber hinaus auch die Kochfeldplatte 6 des Induktionskochfelds 1 gezeigt.

Gerade für spezifische Einbauten ist dies nachteilig, da zum einen die Bauhöhe vergrößert wird, zum anderen diese frei nach hinten bzw. nach unten überstehenden Schnappelemente beim Einbau, beispielsweise in eine Aussparung in einer Arbeitsplatte oder eines Einbaumöbels, beschädigt werden können. Gerade dann, wenn diese Schnappelemente 4 wie im Stand der Technik einstückig aus Kunststoff mit der Trägerplatte ausgebildet sind, kann eine derartige Beschädigung oder ein Abbrechen auftreten, wodurch die gewünschte Verbindung zwischen der Trägerplatte und der Bodenabdeckung 2 nicht mehr gewährleistet ist.

Es offenbart die DE 20 2004 008 515 U1 ein Kochfeld mit Induktions- und Strahlungswärmeelementen, bei dem ein Aufbau des Gehäuses einen Induktor und ein Strahlungswärmeelement sowie verschiedene Kochfeldkomponenten einfasst.

Die EP 2 256 416 A2 betrifft eine Trägeranordnung mit wenigstens einem elektrisch isolierenden Stützelement zum Abstützen einer Platine auf einem Boden und ein Kochfeld mit einer solchen Trägeranordnung.

Es ist Aufgabe der vorliegenden Erfindung, eine Anordnung für ein Kochfeld sowie ein Induktionskochfeld zu schaffen, welches eine sichere und zuverlässige Verbindung zwischen der Trägerplatte und der Bodenabdeckung dieser Anordnung gewährleistet und darüber hinaus eine sehr flach bauende Anordnung und ein entsprechendes Induktionskochfeld ermöglicht.

Diese Aufgabe wird durch eine Anordnung, welche die Merkmale nach Anspruch 1 aufweist, und ein Induktionskochfeld, welches die Merkmale nach Anspruch 15 aufweist, gelöst.

Eine erfindungsgemäße Anordnung für ein Kochfeld umfasst eine Trägerplatte zur Aufnahme eines mit Elektronikkomponenten bestückten Schaltungsträgers. Darüber hinaus umfasst die Anordnung eine unter der Trägerplatte angeordnete Bodenabdeckung. Die Bodenabdeckung ist insbesondere Bestandteil einer wannenartigen Aufnahme, die unter der Kochfeldplatte des Kochfelds angeordnet ist. Diese wannenartige Aufnahme ist zur Aufnahme der Trägerplatte und von Heizkörpern, wie beispielsweise Induktoren, des Kochfelds ausgebildet. Darüber hinaus sind darin auch die weiteren Bauteile, insbesondere auch der Schaltungsträger und die Elektronikkomponenten angeordnet. Diese wannenartige Aufnahme bildet somit das Gehäuse des Kochfelds unter der Kochfeldplatte.

Die Trägerplatte ist mit der Bodenabdeckung lösbar verbunden und an der Bodenabdeckung sind Rastelemente angeordnet, welche zur horizontalen Verrastung mit Rastaufnahmen an der Trägerplatte ausgebildet und angeordnet sind.

Im Unterschied zum Stand der Technik, bei dem die Rastelemente an der Trägerplatte angeordnet sind und bei dem im Hinblick auf die Bauhöhe des Kochfelds lediglich eine vertikale Verrastung der Trägerplatte mit der Bodenabdeckung vorgesehen ist, ist hier ein Rastelement an der Bodenabdeckung angeordnet. Darüber hinaus ist dies so positioniert und ausgebildet, dass beim Zusammenfügen der Bodenabdeckung und der Trägerplatte dieses Rastelement quasi zur horizontalen Verrastung vorgesehen ist, so dass es im zusammengesetzten Zustand der Bodenabdeckung mit der Trägerplatte nicht nach unten über die Bodenabdeckung übersteht.

Die Rastelemente sind darüber hinaus so an der Bodenabdeckung angeordnet, dass sie sich von einer Außenseite der Bodenabdeckung, welche im zusammengesetzten Zustand der Anordnung abgewandt zur Trägerplatte angeordnet ist, abgewandt in Richtung einer Innenseite der Bodenabdeckung über das Niveau der Innenseite erstrecken.

Dies ist ein wesentlicher Unterschied zur Ausgestaltung des Standes der Technik in Fig. 1, bei dem das Schnappelement 4 in vertikaler Richtung nach unten orientiert ist und sich somit über eine Außenseite 7 der Bodenabdeckung nach unten über dieses Niveau der Außenseite 7 erstreckt. Dieses Schnappelement 4, welches an der Trägerplatte angeordnet ist, ist darüber hinaus nur zur vertikalen Verrastung vorgesehen. Dies bedeutet, dass lediglich durch eine Vertikalbewegung und somit eine Bewegung in y-Richtung ein Verschnappen zwischen der Trägerplatte und der Bodenabdeckung 2 erreicht werden kann.

Vorzugsweise ist bei der erfindungsgemäßen Anordnung vorgesehen, dass ein Rastelement an der Bodenabdeckung eine gebogene, plattenartige Federzunge ist. Dies ermöglicht gerade bei der horizontalen Verschiebung der Trägerplatte relativ zur Bodenabdeckung beim Zusammensetzen ein besonders leichtgängiges und verschleißarmes Verrasten. Vorzugsweise ist vorgesehen, dass sich das Rastelement mit einem ersten Elementteil vom Boden der Bodenabdeckung nach oben in Richtung der Trägerplatte erstreckt, wobei das erste Elementteil höher als die Dicke der Trägerplatte ist. Durch eine derartige Ausgestaltung wird somit durch das erste Elementteil auch ein vorzugsweise vertikaler Anschlagrücken geschaffen, der durch das Rastelement selbst gebildet ist. Dieser Anschlagrücken dient somit auch als Anschlag für die Trägerplatte, so dass eine weitere Positionsfixierung zwischen diesen beiden Komponenten, der Trägerplatte einerseits und der Bodenabdeckung andererseits im verrasteten Zustand des Rastelements erreicht ist.

Vorzugsweise ist vorgesehen, dass das Rastelement ein zweites Elementteil aufweist, welches eine Auflagebiegung aufweist, welche im mit der Trägerplatte verbundenen Zustand auf einer der Bodenabdeckung abgewandten Oberseite der Trägerplatte aufsitzt. Durch diese spezifische Ausgestaltung des zweiten Elementteils kann eine mechanisch stabile Verbindung in Form der Einrastung geschaffen werden, welche verrutschsicher positioniert ist. Darüber hinaus kann durch dieses zweite Elementteil ein besonders leichtgängiges Einrutschen bei der horizontalen Zusammenschiebung der Trägerplatte mit der Bodenabdeckung erreicht werden. Durch das von oben aufsitzende zweite Elementteil wird somit auch eine mechanische Kraftverbindung geschaffen, die in vertikaler Richtung eine Positionsfixierung gewährleistet. Insbesondere in Verbindung mit dem als Anschlagrücken ausgebildeten und geformten ersten Elementteil, welches eine horizontale Verrutschsicherung gewährleistet, kann somit quasi in allen drei Raumrichtungen eine Positionsfixierung erzielt werden. Erfindungsgemäß ist vorgesehen, dass die Rastaufnahme an der Trägerplatte eine Vertiefung an einer der Bodenabdeckung abgewandten Oberseite der Trägerplatte ist. Die oben genannten Vorteile im Hinblick auf ein unerwünschtes Verrutschen des zweiten Elementteils relativ zur Trägerplatte werden dadurch nochmals begünstigt.

Vorzugsweise ist vorgesehen, dass die Rastaufnahme benachbart zu einer randseitigen Aussparung der Trägerplatte ausgebildet ist, und im zusammengesetzten Zustand der Trägerplatte mit der Bodenabdeckung das Rastelement in der Aussparung angeordnet ist und in die Rastaufnahme eingreift. Dadurch wird somit quasi ein zusätzlicher Bauraum für das Rastelement geschaffen, so dass es auch seitlich nicht übersteht und somit die Randbegrenzung der Trägerplatte und der Bodenabdeckung nach außen nicht vergrößert wird. Dies ist besonders vorteilhaft im Hinblick auf den Einbau der wannenartigen Aufnahme.

Vorzugsweise ist vorgesehen, dass das Rastelement so angeordnet ist, dass es sich in Richtung der Trägerplatte betrachtet vollständig oberhalb dem Niveau einer der Trägerplatte abgewandten Unterseite bzw. Außenseite der Bodenabdeckung erstreckt.

Bei einer derartigen Ausgestaltung ist somit vollständig vermieden, dass sich das Rastelement nach unten über die Außenseite der Bodenabdeckung erstreckt. Ein nach unten Überstehen des an der Bodenabdeckung angeordneten Rastelements wird somit vermieden. Auch ein an der Bodenabdeckung angeordnetes Rastelement wird somit von außerhalb der Anordnung liegenden Komponenten nicht kontaktiert und auch nicht beschädigt.

Vorzugsweise ist die Trägerplatte aus Kunststoff ausgebildet. Vorzugsweise ist die Bodenabdeckung aus Metall ausgebildet und weist das zumindest eine Rastelement integral auf. Vorzugsweise ist dieses Rastelement durch entsprechende Vorgehensweisen, beispielsweise durch Stanzen und Biegen, einstückig in der Bodenabdeckung ausgebildet und entsprechend geformt. Durch die Integration der Rastelemente in die Bodenabdeckung, welche aus einem sehr stabilen Material ausgebildet ist, kann die stabile Verrastung und der geringe Verschleiß, insbesondere ein Abbrechen der Rastelemente, erreicht werden.

Vorzugsweise ist vorgesehen, dass die Trägerplatte ausschließlich durch Rastelemente, die an der Bodenabdeckung angeordnet sind, mit dieser Bodenabdeckung verbunden ist. Weitere Verbindungselemente sind so dann nicht mehr vorgesehen. Es gewährleistet eine sehr bauteilreduzierte Verbindung, die darüber hinaus auch sehr einfach und schnell handhabbar gelöst und wieder hergestellt werden kann.

Vorzugsweise ist vorgesehen, dass an der Trägerplatte Distanzelemente angeordnet sind, welche zur berührungslosen Distanzbildung zwischen den Rastelementen der Bodenabdeckung und den Schaltungsträgern im zusammengebauten Zustand zwischen den Bauteilen ausgebildet sind. Durch eine derartige Ausgestaltung wird insbesondere dann, wenn die Bodenabdeckung und die Rastelemente aus Metall ausgebildet sind, ein direkter Kontakt zwischen diesen Rastelementen und dem Schaltungsträger vermieden. Dadurch können auch unerwünschte elektrische Vorgänge, wie beispielsweise Kurzschluss oder dergleichen, vermieden werden. Darüber hinaus kann durch diese Distanzelemente auch eine gewünschte Relativposition zwischen den Komponenten der Trägerplatte und der Bodenabdeckung und insbesondere zwischen der Bodenabdeckung und dem Schaltungsträger, der an der Trägerplatte angeordnet ist, dauerhaft und sicher eingehalten werden.

Vorzugsweise sind diese Distanzelemente als Stifte ausgebildet, deren Höhe größer ist als die Höhe, mit der sich das Rastelement an der Bodenabdeckung im zusammengesetzten Zustand der Bodenabdeckung mit der Trägerplatte über der Oberseite der Trägerplatte nach oben erstreckt. Durch eine derartige Ausgestaltung der Distanzelemente kann eine sehr platzsparende und dennoch mechanisch stabile und robuste Ausgestaltung geschaffen werden. Darüber hinaus kann durch eine derartige Formgebung der Distanzelemente eine sehr zielgenaue und flächenminimierte mechanische Kontaktierung zwischen den Distanzelementen und dem Schaltungsträger erreicht werden. Die unerwünscht großflächige Auflage ist dadurch vermieden.

Vorzugsweise ist vorgesehen, dass die Distanzelemente zur Auflage eines aus dem Schaltungsträger angeordneten Elektronikkomponententrägers ausgebildet ist. Insbesondere ist der Elektronikkomponententräger zumindest bereichweise als Kühlkörper ausgebildet. Gerade dieser Teilbereich des Elektronikkomponententrägers kann dann auf diesen Distanzelementen aufsitzen.

Vorzugsweise ist vorgesehen, dass die Bodenabdeckung Führungslaschen aufweist, welche beim Zusammenfügen der Bodenabdeckung mit der Trägerplatte in Führungsbereichen der Trägerplatte eingreifen und eine, insbesondere lineare Bewegung der Trägerplatte relativ zur Bodenabdeckung, durch die Führungslaschen geführt ist. Insbesondere wird bei der vorliegenden Ausgestaltung eine horizontale Relativbewegung zwischen der Trägerplatte und der Bodenabdeckung zur Zusammenfügung dieser beiden Komponenten durchgeführt. Durch diese Führungslaschen wird diese horizontale Bewegungsführung geführt. Es tritt kein Verklemmen oder Verspreizen auf, so dass insbesondere auch eine sehr geradlinige horizontale Verrastung zwischen den Rastelementen der Bodenabdeckung und den Rastaufnahmen der Trägerplatte zielsicher erreicht wird.

Vorzugsweise ist vorgesehen, dass die Führungslaschen während der Relativbewegung zwischen der Trägerplatte und der Bodenabdeckung eine Laschenaufnahmemulde von oben übergreifen und in der Endlage der Bodenabdeckung und der Trägerplatte die Führungslasche in der Laschenaufnahmemulde eingreifend angeordnet ist. Zum einen kann dadurch zunächst der Anfangszustand und die Anfangspositionierung zwischen der Trägerplatte und der Bodenabdeckung sehr einfach erreicht werden, ohne dass auf irgendwelche Hintergreifungen der Komponenten betreffend die Führungsvorrichtung geachtet werden müsste. Ist diese Ausgangsposition erreicht, kann dann durch diese horizontale Relativbewegung zwischen der Bodenabdeckung und der Trägerplatte dieses Übergreifen der Laschenaufnahmemulde durch die Führungslasche automatisch erreicht werden. Auch hier wird somit neben der Funktionalität der automatischen geradlinigen Bewegungsführungsunterstützung eine zusätzliche mechanische Verbindungsstabilisierung in der Endlage zwischen der Trägerplatte und der Bodenabdeckung erreicht, wenn die Führungslasche in die Laschenaufnahmemulde eingreift. Auch dadurch ist zusätzlich zu der Verrastung zwischen dem Rastelement und der Rastaufnahme eine weitere Halterungs- und Positionsfixierung gewährleistet.

Die Erfindung betrifft darüber hinaus ein Induktionskochfeld mit einer erfindungsgemäßen Anordnung oder einer vorteilhaften Ausgestaltung davon.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Es zeigen:
- Fig. 1: eine perspektivische Darstellung eines Teilausschnitts eines Induktionskochfelds gemäß dem Stand der Technik bei einer Betrachtung seitlich von unten;
- Fig. 2: eine Draufsicht auf ein Induktionskochfeld gemäß einem Ausführungsbeispiel der Erfindung mit abgenommener Kochfeldplatte;
- Fig. 3: eine perspektivische Teildarstellung der Ausführung in Fig. 2 in einem ersten Montagezustand;
- Fig. 4: eine perspektivische Darstellung der Ausführung in Fig. 2 in einem zweiten Montagezustand;
- Fig. 5: eine Seitenansicht des Induktionskochfelds gemäß Fig. 2 mit zusätzlicher Kochfeldplatte;
- Fig. 6: eine Seitenansicht auf Teilkomponenten des Induktionskochfelds gemäß Fig. 2;
- Fig. 7: eine perspektivische Darstellung eines Teilausschnitts gemäß der Ausführungen in Fig. 2;
- Fig. 8: eine perspektivische Darstellung eines Ausführungsbeispiels einer Rastlasche der Bodenabdeckung des Induktionskochfelds gemäß Fig. 2;
- Fig. 9: eine perspektivische Darstellung eines montierten Endzustands der Rastlasche in Fig. 8 mit einer Rastaufnahme einer Trägerplatte;
- Fig. 10: eine Draufsicht auf eine Führungslasche in einem ersten Montagezustand;
- Fig. 11: eine Draufsicht auf eine Darstellung gemäß Fig. 10, bei der die Führungslasche in einem zweiten Montagezustand gezeigt ist;
- Fig. 12: eine perspektivische Darstellung eines Teilausschnitts der Darstellung in Fig. 2 mit gezeigter Führungslasche gemäß Fig. 10 und Fig. 11; und
- Fig. 13: eine Schnittdarstellung eines Teilausschnitts gemäß der Darstellung in Fig. 2.

In den Figuren werden gleiche oder funktionsgleiche Elemente mit den gleichen Bezugszeichen versehen.

In Fig. 2 ist in einer Draufsicht ein Induktionskochfeld 1 gezeigt, welches ohne eine Kochfeldplatte dargestellt ist. Dies bedeutet, dass die Kochfeldplatte abgenommen ist und in das Innere einer wannenartigen Aufnahme 8 eingesehen werden kann. Diese wannenartige Aufnahme 8 umfasst eine Bodenabdeckung 2', die hier mit den seitlich nach oben und somit senkrecht zur Figurenebene stehenden umlaufenden Wänden diese Wannenform bildet.

Im Inneren dieser wannenförmigen Aufnahme 8 ist auf dieser Bodenplatte bzw. Bodenabdeckung 2' eine Trägerplatte 9 aus Kunststoff ausgebildet. Diese Trägerplatte 9 ist einstückig ausgebildet und zur Aufnahme des nicht gezeigten Schaltungsträgers bzw. einer Platine konzipiert. Insbesondere ist auf diesem Schaltungsträger die Leistungselektronik angeordnet, über welche die nicht gezeigten Induktoren des Induktionskochfelds 1 mit elektrischer Energie versorgt werden können.

Die Trägerplatte 9 ist im gezeigten Ausführungsbeispiel ausschließlich durch Rastverbindungen und Einschnappungen mit der Bodenabdeckung 2' verbunden.

Der nicht gezeigte Schaltungsträger ist dabei auf einer Oberseite 10 der Trägerplatte befestigbar.

In der gezeigten Ausführung ist die Bodenabdeckung 2' aus Metall ausgebildet und die Trägerplatte 9 aus Kunststoff.

Die Bodenabdeckung 2' umfasst zumindest ein Rastelement 11, welches zur Verbindung mit einer Rastaufnahme 12, die auf der Oberseite 10 der Trägerplatte 9 ausgebildet ist, vorgesehen ist. Im in Fig. 2 gezeigten Zustand ist die montierte Endlage zwischen der Trägerplatte 9 und der Bodenabdeckung 2' gezeigt.

Die Trägerplatte 9 umfasst dazu eine randseitige Öffnung bzw. Aussparung 13, durch welche sich das Rastelement 11 von unten hindurcherstreckt und dann auf der Oberseite 10 in dieser Rastaufnahme 12, welche muldenartig ausgebildet ist, zur Anlage kommt. In der Ausführung ist vorgesehen, dass zur Verbindung zwischen der Trägerplatte 9 und der Bodenabdeckung 2' eine lineare Bewegung insbesondere eine Schiebebewegung in der Figurenebene durchgeführt wird, welche sich insbesondere in z-Richtung durchführen lässt. Das Rastelement 11 ist im Wesentlichen horizontal orientiert, was bedeutet, dass zur Verrastung im Hinblick auf die lineare Horizontalbewegung das Rastelement 11 dann automatisch in die Rastaufnahme 12 einrastet.

Im Hinblick auf eine sichere Bewegungsführung bei dieser linearen Horizontalbewegung in z-Richtung zur Verbindung der Trägerplatte 9 mit der Bodenabdeckung 2' weist die Bodenabdeckung 2' Führungslaschen 14 und 15 auf, die an gegenüberliegenden Seiten angeordnet sind. Diese Führungslaschen 14 und 15 sind ebenfalls einstückig mit der Bodenabdeckung 2' verbunden und nach oben in Richtung der Trägerplatte 9 gebogene Elemente.

In der gezeigten Ausführung ist insbesondere vorgesehen, dass sowohl die Führungslaschen 14 und 15 als auch die Rastlasche bzw. das Rastelement 11 sich nicht nach unten und somit nach außen erstrecken, sondern sich in das Innere der Aufnahme 8 in Richtung der Trägerplatte 9 erstrecken. Eine Ausformung der Führungslaschen 14 und 15 und des Rastelements 11 dahingehend, dass sie sich zumindest bereichsweise über das Niveau einer Außenseite der Bodenabdeckung 2', die eine Unterseite darstellt, welche der Trägerplatte 9 abgewandt ist, nach unten erstrecken, ist daher nicht vorgesehen und nicht ausgebildet. Vielmehr erstrecken sich somit diese Laschen bzw. Elemente von einer Innenseite 16 der Bodenabdeckung 2' nach oben in Richtung der Trägerplatte 9.

Darüber hinaus sind weitere Führungselemente 17 und 18 ausgebildet, die jedoch an der Trägerplatte 9 angeformt sind. Auch diese sind als Laschen und somit als zumindest bereichsweise federnde Zungen ausgebildet, die dann in der gezeigten Endlage der Trägerplatte 9 in entsprechende Öffnungen in der Bodenabdeckung 2' einschnappen.

Insbesondere durch die Führungslaschen 14 und 15 wird bei der horizontalen Schiebebewegung in z-Richtung die Trägerplatte 9 relativ zur Bodenabdeckung 2' geführt, so dass auch sehr zielsicher das Rastelement 11 in die Rastaufnahme 12 einrasten kann.

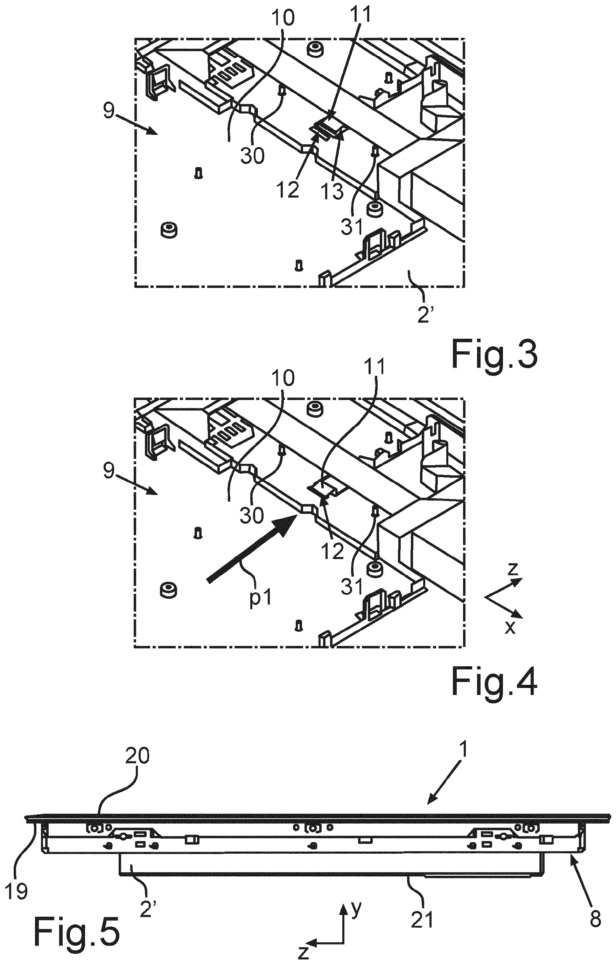

In Fig. 3 ist in einer perspektivischen Darstellung ein Teilausschnitt der Darstellung in Fig. 2 gezeigt. Insbesondere ist hier ein erster Montagezustand gezeigt, bei dem das Rastelement 11 zwar durch die Aussparung 13 hindurchragt, jedoch noch nicht in der Rastaufnahme 12 der Trägerplatte 9 verrastet ist.

In der Darstellung gemäß Fig. 4 ist der perspektivische Teilausschnitt gemäß Fig. 3 in einem zweiten Montagezustand gezeigt, bei dem das Rastelement 11 in dieser Rastaufnahme 12 verrastet ist. Mit dem Pfeil P1 ist die lineare horizontale Schieberichtung zur Montage der Trägerplatte 9 mit der Bodenabdeckung 2' gekennzeichnet.

In Fig. 5 ist eine Seitenansicht des fertig zusammengebauten Induktionskochfelds 1 gezeigt. Es ist zu erkennen, das die wannenartige Aufnahme 8 mit der Bodenabdeckung 2' an einer Unterseite 19 einer Kochfeldplatte 20 montiert ist. Darüber hinaus ist zu erkennen, dass eine Außenseite 21 der Bodenabdeckung 2' nahezu eben ausgebildet ist und kein nach unten überstehendes Rastelement zu erkennen ist. Dies, da wie bereits oben erläutert, das Rastelement 11 sowie die Führungslaschen 14 und 15 als auch die Elemente 17 und 18 so ausgebildet sind, dass sie sich in y-Richtung nicht unter das Niveau der Außenseite 21 der Bodenabdeckung 2' nach unten erstrecken.

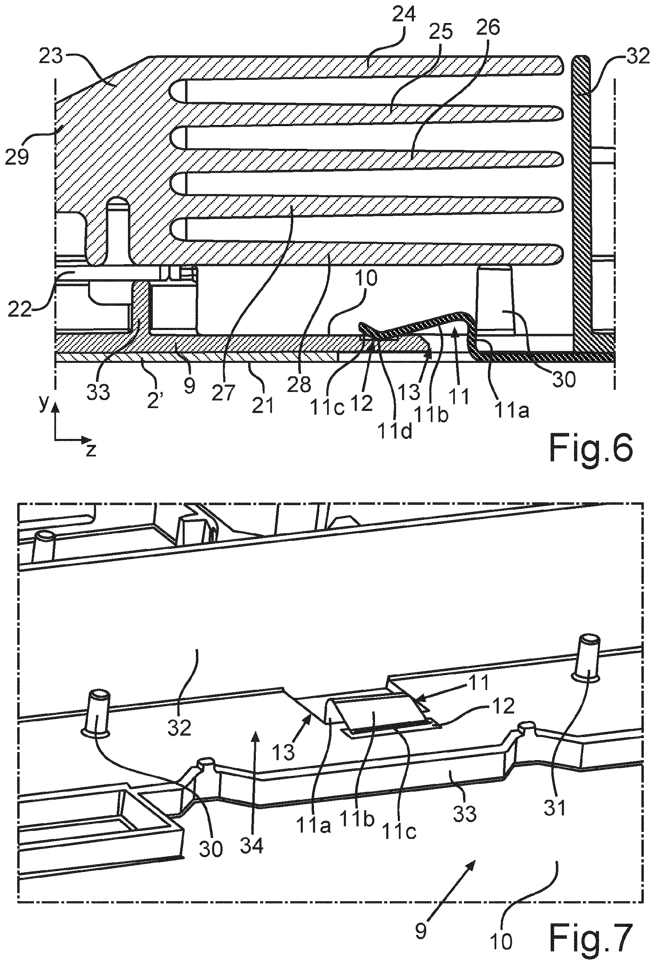

In Fig. 6 ist eine Seitenansicht des montierten Endzustands der Trägerplatte 9 mit der Bodenabdeckung 2' im Bereich des Rastelements 11 gezeigt. Darüber hinaus ist ein Schaltungsträger 22 teilweise zu erkennen, auf dem ein Elektronikkomponententräger 23 montiert ist. Dieser Elektronikkomponententräger 23 ist als Kühlkörper ausgebildet, der eine Mehrzahl von Kühlrippen 24, 25, 26, 27 und 28 aufweist. An einem vorderen Teil 29 des Elektronikkomponententrägers 23 sind dann nicht näher gekennzeichnete Elektronikbauteile montiert. Durch den Kühlkörper wird die von den Elektronikkomponenten erzeugte Wärme abgeführt. Dabei ist insbesondere vorgesehen, dass zwischen den Kühlrippen 26 bis 28 Kühlluft strömt.

Wie aus der Darstellung in Fig. 6 zu entnehmen ist, ist der Schaltungsträger 22 mit seinem Elektronikkomponententräger 23 direkt über dem Rastelement 11 montiert. Da das Rastelement aus Metall ist, ebenso wie die Bodenabdeckung 2', ist es erforderlich, dass kein direkter Kontakt zwischen dem Rastelement 11 und den Elektronikkomponenten sowie dem Schaltungsträger 22 hergestellt ist. Insbesondere ist dabei auch eine Kontaktierung mit dem aus Metall ausgebildeten Elektronikkomponententräger 23 zu vermeiden. Insbesondere ist dabei im Ausführungsbeispiel vorgesehen, dass Distanzelemente 30 und 31 ausgebildet sind, die als einstückig mit der Trägerplatte 9 ausgebildete Kunststoffstifte realisiert sind. Diese sind im Hinblick auf die vertikale Höhe (y-Richtung) höher ausgebildet, als sich das Rastelement 11 nach oben über das Niveau der Oberseite 10 der Trägerplatte 9 erstreckt.

Wie zu erkennen ist, sitzt der Elektronikkomponententräger 23 insbesondere mit der unteren Kühlrippe 28 direkt aufliegend auf den Distanzelementen 30 und 31 auf. In Fig. 6 ist darüber hinaus die explizite Formgestaltung des Rastelements 11 zu erkennen. Dieses weist ein erstes Elemententeil 11a auf, welches sich im Wesentlichen vertikal nach oben erstreckt und eine Höhe aufweist, die größer ist als die Dicke der Trägerplatte 9. Dieses erste Elementteil 11a geht in ein zweites Elementteil 11b über, welches schräg verlaufend nach unten orientiert ausgebildet ist und an einem vorderen freien Ende eine nach oben gebogene Zunge 11c aufweist. Durch diese in zwei verschiedene Richtungen gebogenen Teilabschnitte in Form des zweiten Elementteils 11b und der Zunge 11c wird ein Biegebereich 11d geschaffen, der in der Rastaufnahme 12 verrastet ist.

Darüber hinaus ist zu erkennen, dass das erste Elementteil 11a als Anschlag für die Trägerplatte 9 dient.

Wie explizit aus der Darstellung in Fig. 6 zu entnehmen ist, erstreckt sich dieses Rastelement 11 ausgehend von der Außenseite 21 der Bodenabdeckung 2' nach oben und somit in Richtung der Trägerplatte 9. Das Rastelement 11 steht nicht nach unten über die Unterseite bzw. Außenseite 21 der Bodenabdeckung 2' über.

Darüber hinaus ist die im Wesentlichen horizontale Orientierung und somit die Orientierung in z-Richtung des für die Verrastung vorgesehenen Abschnitts des Rastelements 11 gezeigt, so dass die angesprochene horizontale Verrastung gewährleistet ist.

In Fig. 7 ist ein vergrößerter Teilausschnitt in perspektivischer Darstellung der Ausführung in Fig. 2 im Bereich des Rastelements 11 gezeigt.

Durch die gezeigten Wandungen 32 und 33 werden Wandbereiche eines Strömungskanals gebildet, der nach vorne hin und nach oben hin offen ausgebildet ist. Danach wird ein Aufnahmeschacht 34 gebildet, in den dann gemäß der Darstellung in Fig. 6 der Elektronikkomponententräger 23 eingebracht ist.

Der Kühlluftstrom wird dabei durch die in Fig. 2 gezeigte Strömungsöffnung 35 in der Bodenabdeckung 2' eingeblasen, mündet an einem Strömungskanaleinlass 36 in den Strömungskanal und tritt an einem Strömungskanalauslass 37 durch eine in Fig. 2 nicht erkennbare und durch den Strömungskanalauslass 37 haubenartig abgedeckte weitere Strömungsöffnung in der Bodenabdeckung 2' wieder aus.

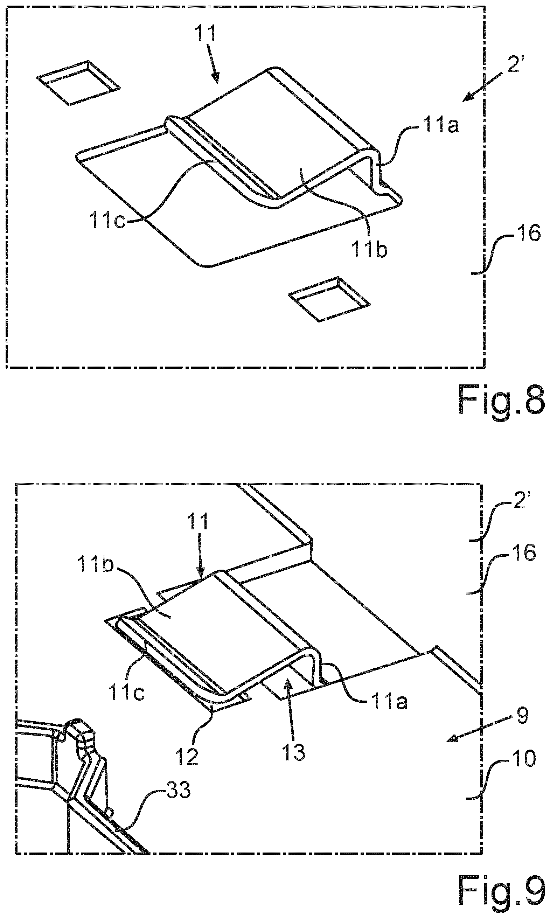

In Fig. 8 ist eine vergrößerte Darstellung des Rastelements 11 gezeigt, welches einstückig mit der Bodenabdeckung 2' ausgeformt und ausgebildet ist.

In Fig. 9 ist die perspektivisch vergrößerte Darstellung im verrasteten Zustand des Rastelements 11 mit der Rastaufnahme 12 gezeigt.

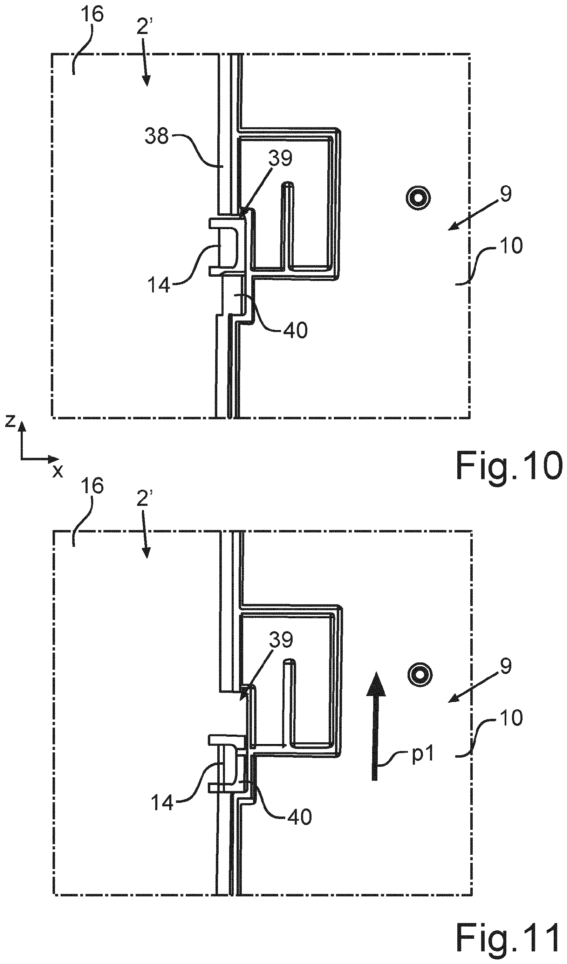

Die Darstellung in Fig. 10 zeigt eine Draufsicht, wie sie auch bereits in Fig. 2 dargestellt ist, wobei hier eine vergrößerte Teilausschnittdarstellung des Bereichs um die Führungslasche 14 in einem ersten Montagezustand gezeigt ist. Es ist dabei zu erkennen, dass die Trägerplatte 9' noch nicht in ihrer Endlage eingebracht ist, sondern zunächst in einer Montagestellung angebracht ist, bei der dann noch die bereits angesprochene und in Fig. 4 gezeigte horizontale Linearverschiebung zu erfolgen hat, die sich in der Figurenebene abspielt. Insbesondere ist in Fig. 6 der Montagezustand gezeigt, wie er in Fig. 3 realisiert ist. Es ist zu erkennen, dass an einem Rand 38 der Trägerplatte 9' eine Einbuchtung 39 ausgebildet ist. In dieser ist sehr bodennah eine in z-Richtung sich nur teilweise über die Länge der Einbuchtung 39 erstreckende Laschenaufnahmemulde 40 gebildet. Wie gemäß der Darstellung in Fig. 10 zu erkennen ist, ist bei diesem Montagezustand die Führungslasche 14 noch nicht flächenüberlappend mit dieser Laschenaufnahmemulde 40 angeordnet.

Wird nun ausgehend von diesem Montagezustand die Trägerplatte 9 gemäß der Darstellung in Fig. 11 in Richtung des Pfeils P1 verschoben, so übergreift im Laufe dieser Linearbewegung die Führungslasche 14 die Laschenaufnahmemulde 40 und gemäß dem in Fig. 4 gezeigten Endzustand, in dem auch das Rastelement 11 in die Rastaufnahme 12 verrastet ist, greift auch die Führungslasche 14 in die Laschenaufnahmemulde 40 ein. Durch diese Führungslasche 14, wie auch durch die gegenüberliegende Führungslasche 15 wird diese lineare Bewegungsführung in Richtung des Pfeils P1 geführt, so dass ein Verkippen oder Verspreizen der Trägerplatte 9 vermieden werden kann.

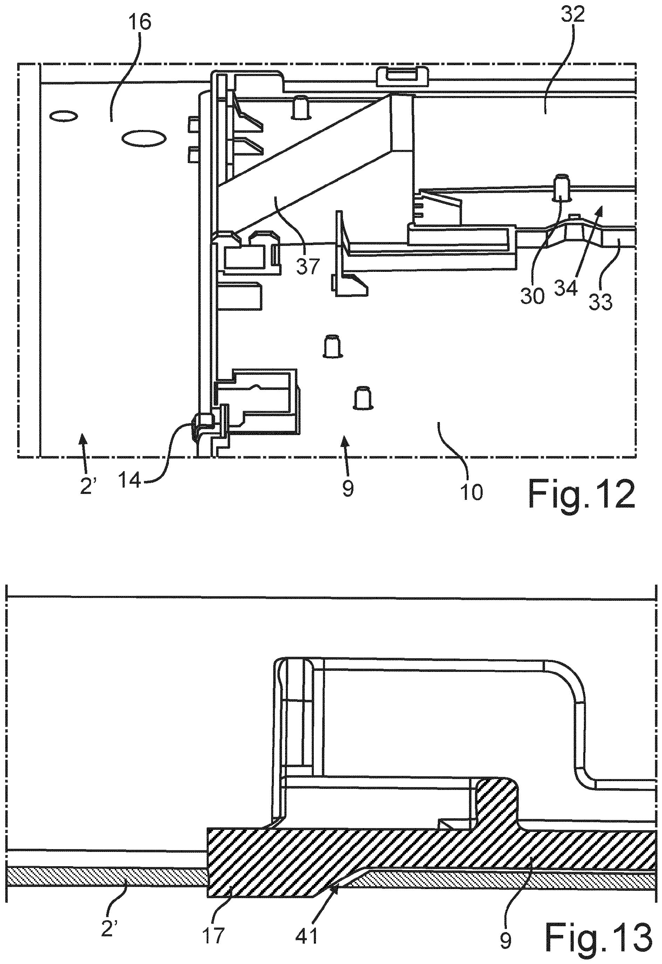

In Fig. 12 ist eine perspektivische Darstellung der Ausführung von Fig. 10 gezeigt und die nach oben L-förmige sich erstreckende Führungslasche 14 zu erkennen.

In Fig. 13 ist in einer Schnittdarstellung der Schnitt entlang der Schnittlinie XIII - XIII in Fig. 2 gezeigt. Es ist dabei zu erkennen, dass dieses Führungselement 17 nach unten keulenförmig verbreitert ist und im gezeigten Endzustand gemäß der Darstellung in Fig. 2 betreffend die Montageposition zwischen der Trägerplatte 9 und der Bodenabdeckung 2' diese Führungselemente 17 in eine Aussparung 41 in der Bodenabdeckung 2' eingeschnappt ist. Entsprechend ist dies auch dann bei der Arretierungs- bzw. Fixierungslasche 18 der Fall.

Wie somit anhand der Darstellungen und gemäß der Draufsicht in Fig. 2 zu erkennen ist, ist zumindest ein Rastelement 11 vorgesehen, welches an der Bodenabdeckung 2' angeformt ist und auf einer Oberseite der Trägerplatte 9 in einer Rastaufnahme 12 verrastet ist. Dieses Rastelement 11 greift dabei durch die Aussparung 13 in eine Trägerplatte 9 von unten hindurch und kommt auf dieser Oberseite 10 zum Liegen. Auf der gegenüberliegenden Randseite der Trägerplatte 9 sind an der Trägerplatte 9 diese beiden Elemente 17 und 18 angeformt, die wiederum in Aussparungen bzw. Öffnungen 41 in der Bodenabdeckung 2' zum Liegen kommen, wenn die Trägerplatte 9 mit der Bodenabdeckung 2' in der Endlage montiert ist. Darüber hinaus sind an den gegenüberliegenden Randseiten der Trägerplatte 9 Führungslaschen 14 und 15, die an der Bodenabdeckung 2' angeformt sind, in Laschenaufnahmemulden 40 eingreifend angeordnet. Von zumindest drei Randseiten her ist somit die Trägerplatte 9 durch Rastelemente und Laschen gehalten. Darüber hinaus dienen zumindest die Führungslaschen 14 und 15 zur Bewegungsführung der Trägerplatte 9 während des Montagevorgangs mit der Bodenabdeckung 2'.

### Bezugszeichenliste

- 1: Induktionskochfeld
- 2, 2': Bodenabdeckung
- 3: Aufnahme
- 4: Schnappelement
- 5: Öffnung
- 6: Kochfeldplatte
- 7: Außenseite
- 8: Aufnahme
- 9, 9': Trägerplatte
- 10: Oberseite
- 11: Rastelement
- 11a: erstes Elementteil
- 11b: zweites Elementteil
- 11c: Zunge
- 11d: Biegung
- 12: Rastaufnahme
- 13: Aussparung
- 14: Führungslasche
- 15: Führungslasche
- 16: Innenseite
- 17: Führungselement
- 18: Führungselement
- 19: Unterseite
- 20: Kochfeldplatte
- 21: Außenseite
- 22: Schaltungsträger
- 23: Elektronikkomponententräger
- 24: Kühlrippe
- 25: Kühlrippe
- 26: Kühlrippe
- 27: Kühlrippe
- 28: Kühlrippe
- 29: vorderer Teil
- 30: Distanzelement
- 31: Distanzelement
- 32: Wandung
- 33: Wandung
- 34: Aufnahmeschacht
- 35: Strömungsöffnung
- 36: Strömungskanaleinlass
- 37: Strömungskanalauslass
- 38: Rand
- 39: Einbuchtung
- 40: Laschenaufnahmemulde
- 41: Aussparung

## Patentansprüche

1. Anordnung für ein Kochfeld (1), mit einer Trägerplatte (9) zur Aufnahme eines mit Elektronikkomponenten bestückten Schaltungsträgers (22) und mit einer unter der Trägerplatte (9) angeordneten Bodenabdeckung (2, 2'), wobei die Trägerplatte (9) mit der Bodenabdeckung (2, 2') lösbar verbunden ist, an der Bodenabdeckung (2') zumindest ein Rastelement (11) angeordnet ist, welches zur horizontalen Verrastung mit einer Rastaufnahme (12) an der Trägerplatte (9) ausgebildet und angeordnet ist und sich von einer Außenseite (21) der Bodenabdeckung (2') abgewandt in Richtung einer Innenseite (16) der Bodenabdeckung (2') über das Niveau der Innenseite (16) erstreckt und **dadurch gekennzeichnet, dass** die Rastaufnahme (12) eine Vertiefung in einer der Bodenabdeckung (2') abgewandten Oberseite (10) der Trägerplatte (9) ist.

2. Anordnung nach Anspruch 1, **dadurch gekennzeichnet, dass** ein Rastelement (11) eine gebogene plattenartige Federzunge ist.

3. Anordnung nach Anspruch 1 oder 2, **dadurch gekennzeichnet, dass** sich das Rastelement (11) mit einem ersten Elementteil (11a) von der Innenseite (16) der Bodenabdeckung (2') nach oben in Richtung der Trägerplatte (9) erstreckt, wobei das erste Elementteil (11a) höher als die Dicke der Trägerplatte (9) ist.

4. Anordnung nach einem der vorhergehenden Ansprüche, **dadurch gekennzeichnet, dass** das Rastelement (11) ein zweites Elementteil (11b, 11c) aufweist, welches eine Auflagebiegung (11d) aufweist, welche im mit der Trägerplatte (9) verbundenen Zustand auf einer der Bodenabdeckung (2') abgewandten Oberseite (10) der Trägerplatte (9) aufsitzt.

5. Anordnung nach einem der vorhergehenden Ansprüche, **dadurch gekennzeichnet, dass** die Rastaufnahme (12) benachbart zu einer randseitigen Aussparung (13) der Trägerplatte (9) ausgebildet ist, und im zusammengesetzten Zustand der Trägerplatte (9) mit der Bodenabdeckung (2') das Rastelement (11) in der Aussparung (13) angeordnet ist und in die Rastaufnahme (12) eingreift.

6. Anordnung nach einem der vorhergehenden Ansprüche, **dadurch gekennzeichnet, dass** das Rastelement (11) so angeordnet ist, dass es sich in Richtung der Trägerplatte (9) betrachtet vollständig oberhalb dem Niveau einer der Trägerplatte (9) abgewandten Außenseite (21) der Bodenabdeckung (2') erstreckt.

7. Anordnung nach einem der vorhergehenden Ansprüche, **dadurch gekennzeichnet, dass** die Trägerplatte (9) aus Kunststoff ausgebildet ist und/oder die Bodenabdeckung (2') aus Metall ausgebildet ist.

8. Anordnung nach einem der vorhergehenden Ansprüche, **dadurch gekennzeichnet, dass** die Trägerplatte (9) ausschließlich durch Verrastungen mit der Bodenabdeckung (2') verbunden ist.

9. Anordnung nach einem der vorhergehenden Ansprüche, **dadurch gekennzeichnet, dass** an der Trägerplatte (9) Distanzelemente (30, 31) angeordnet sind, welche zur berührungslosen Distanzbildung zwischen dem Rastelement (11) der Bodenabdeckung (2') und dem Schaltungsträger (22) im zusammengebauten Zustand zwischen den Bauteilen (11, 22) ausgebildet sind.

10. Anordnung nach Anspruch 10, **dadurch gekennzeichnet, dass** die Distanzelemente (30, 31) als Stifte ausgebildet sind, deren Höhe größer ist als die Höhe, mit der sich ein Rastelement (11) im zusammengebauten Zustand der Bodenabdeckung (2') mit der Trägerplatte (9) über der Oberseite (10) der Trägerplatte (9) nach oben erstreckt.

11. Anordnung nach Anspruch 10 oder 11, **dadurch gekennzeichnet, dass** die Distanzelemente (30, 31) zur Auflage eines auf dem Schaltungsträger (22) angeordneten Elektronikkomponententrägers (23) ausgebildet sind.

12. Anordnung nach einem der vorhergehenden Ansprüche, **dadurch gekennzeichnet, dass** die Bodenabdeckung (2') Führungslaschen (14, 15) aufweist, welche beim Zusammenfügen der Bodenabdeckung (2') mit der Trägerplatte (9) in Führungsbereiche (40) der Trägerplatte (9) eingreifen und eine, insbesondere lineare Bewegung (P1), der Trägerplatte (9) relativ zur Bodenabdeckung (2'), durch die Führungslaschen (14, 15) geführt ist.

13. Anordnung nach Anspruch 13, **dadurch gekennzeichnet, dass** die Führungslaschen (14, 15) während der Relativbewegung zwischen der Trägerplatte (9) und der Bodenabdeckung (2') eine Laschenaufnahmemulde (40) von oben übergreifen und in der Endlage der Bodenabdeckung (2') und der Trägerplatte (9) die Führungslasche (14, 15) in der Laschenaufnahmemulde (40) eingreifend angeordnet ist.

14. Induktionskochfeld (1) mit einer Anordnung nach einem der vorhergehenden Ansprüche.

## Claims

1. Assembly for a hob (1), with a support plate (9) for accommodating a circuit carrier (22) equipped with electronic components and with a base cover (2, 2') arranged below the support plate (9), wherein the support plate (9) is releasably connected to the base cover (2, 2'), at least one latching element (11) is arranged on the base cover (2'), which latching element (11) is embodied and arranged for horizontal latching with a latching receptacle (12) on the support plate (9) and extends facing away from an outer side (21) of the base cover (2') in the direction of an inner side (16) of the base cover (2') above the level of the inner side (16) and **characterised in that** the latching receptacle (12) is a depression in an upper side (10) of the support plate (9) facing away from the base cover (2').

2. Assembly according to claim 1, **characterised in that** a latching element (11) is a curved, plate-like spring tab.

3. Assembly according to claim 1 or 2, **characterised in that** the latching element (11) extends with a first element part (11a) from the inner side (16) of the base cover (2') upwards in the direction of the support plate (9), wherein the first element part (11a) is higher than the thickness of the support plate (9).

4. Assembly according to one of the preceding claims, **characterised in that** the latching element (11) has a second element part (11b, 11c), which has a contact curve (11d) which, in the state connected to the support plate (9), rests on an upper side (10) of the support plate (9) facing away from the base cover (2')

5. Assembly according to one of the preceding claims, **characterised in that** the latching receptacle (12) is embodied to be adjacent to an edge-side cutout (13) in the support plate (9) and, in the assembled state of the support plate (9) with the base cover (2'), the latching element (11) is arranged in the cutout (13) and engages into the latching receptacle (12).

6. Assembly according to one of the preceding claims, **characterised in that** the latching element (11) is arranged so that it extends, viewed in the direction of the support plate (9), completely above the level of an outer side (21) of the base cover (2') facing away from the support plate (9).

7. Assembly according to one of the preceding claims, **characterised in that** the support plate (9) is embodied from plastic and/or the base cover (2') is embodied from metal.

8. Assembly according to one of the preceding claims, **characterised in that** the support plate (9) is connected to the base cover (2') solely by way of latches.

9. Assembly according to one of the preceding claims, **characterised in that** distance elements (30, 31) are arranged on the support plate (9), which distance elements (30, 31) are embodied to form a contactless distance between the latching element (11) of the base cover (2') and the circuit carrier (22) in the assembled state of the components (11, 22).

10. Assembly according to claim 10, **characterised in that** the distance elements (30, 31) are embodied as pins, the height of which is greater than the height with which a latching element (11) extends upwardly above the upper side (10) of the support plate (9) in the assembled state of the base cover (2') with the support plate (9).

11. Assembly according to claim 10 or 11, **characterised in that** the distance elements (30, 31) are embodied to be seated on an electronic component carrier (23) arranged on the circuit carrier (22).

12. Assembly according to one of the preceding claims, **characterised in that** the base cover (2') has guiding tabs (14, 15) which engage into guiding regions (40) of the support plate (9) when the base cover (2') and the support plate (9) are joined together and a movement (P1), in particular a linear movement (P1), of the support plate (9) relative to the base cover (2') is guided by the guiding tabs (14, 15).

13. Assembly according to claim 13, **characterised in that** the guiding tabs (14, 15) overlap a tab receptacle recess (4) from above during the relative movement between the support plate (9) and the base cover (2') and, in the end position of the base cover (2') and the support plate (9), the guiding tab (14, 15) is arranged so as to engage in the tab receptacle recess (40).

14. Induction hob (1) with an assembly according to one of the preceding claims.

## Revendications

1. Agencement pour une table de cuisson (1), comprenant une plaque de support (9) destinée à loger un support de circuit (22) équipé de composants électroniques et comprenant un recouvrement de sol (2, 2') disposé sous la plaque de support (9), la plaque de support (9) étant reliée de manière amovible au recouvrement de sol (2, 2'), au moins un élément d'enclenchement (11) étant disposé sur le recouvrement de sol (2'), lequel est réalisé et disposé pour l'enclenchement horizontal avec un logement d'enclenchement (12) sur la plaque de support (9) et s'étend, en étant détourné d'un côté extérieur (21) du recouvrement de sol (2'), en direction d'un côté intérieur (16) du recouvrement de sol (2') au-dessus du niveau du côté intérieur (16) et **caractérisé en ce que** le logement d'enclenchement (12) est un approfondissement dans un côté supérieur (10) de la plaque de support (9), détourné du recouvrement de sol (2').

2. Agencement selon la revendication 1, **caractérisé en ce qu'**un élément d'enclenchement (11) est une languette élastique courbée en forme de plaque.

3. Agencement selon la revendication 1 ou 2, **caractérisé en ce que** l'élément d'enclenchement (11) s'étend, avec une première partie d'élément (11a), du côté intérieur (16) du recouvrement de sol (2') vers le haut en direction de la plaque de support (9), la première partie d'élément (11a) étant plus haute que l'épaisseur de la plaque de support (9).

4. Agencement selon l'une quelconque des revendications précédentes, **caractérisé en ce que** l'élément d'enclenchement (11) présente une deuxième partie d'élément (11b, 11c) laquelle présente une courbe d'application (11d) qui, à l'état raccordé avec la plaque de support (9), repose sur un côté supérieur (10) de la plaque de support (9) détourné du recouvrement de sol (2').

5. Agencement selon l'une quelconque des revendications précédentes, **caractérisé en ce que** le logement d'enclenchement (12) est réalisé de manière avoisinante à un évidement (13) côté bord de la plaque de support (9), et **en ce que**, à l'état assemblé de la plaque de support (9) avec le recouvrement de sol (2'), l'élément d'enclenchement (11) est disposé dans l'évidement (13) et a prise dans le logement d'enclenchement (12).

6. Agencement selon l'une quelconque des revendications précédentes, **caractérisé en ce que** l'élément d'enclenchement (11) est disposé de manière à ce qu' en vue en direction de la plaque de support (9), il s'étende complètement au-dessus du niveau d'un côté extérieur (21) du recouvrement de sol (2'), détourné de la plaque de support (9).

7. Agencement selon l'une quelconque des revendications précédentes, **caractérisé en ce que** la plaque de support (9) est réalisée en matière plastique et/ou **en ce que** le recouvrement de sol (2') est réalisé en métal.

8. Agencement selon l'une quelconque des revendications précédentes, **caractérisé en ce que** la plaque de support (9) est reliée au recouvrement de sol (2') uniquement au moyen d'enclenchements.

9. Agencement selon l'une quelconque des revendications précédentes, **caractérisé en ce que** des éléments d'écartement (30, 31) sont disposés sur la plaque de support (9), lesquels sont réalisés pour former un écartement sans contact entre l'élément d'enclenchement (11) du recouvrement de sol (2') et le support de circuit (22) à l'état assemblé entre les composants (11, 22).

10. Agencement selon la revendication 10, **caractérisé en ce que** les éléments d'écartement (30, 31) sont réalisés comme tiges dont la hauteur est supérieure à la hauteur avec laquelle un élément d'enclenchement (11), à l'état assemblé du recouvrement de sol (2') avec la plaque de support (9), s'étend vers le haut au-dessus du côté supérieur (10) de la plaque de support (9).

11. Agencement selon la revendication 10 ou 11, **caractérisé en ce que** les éléments d'écartement (30, 31) sont réalisés pour l'appui d'un support de composants électroniques (23) disposé sur le support de circuit (22).

12. Agencement selon l'une quelconque des revendications précédentes, **caractérisé en ce que** le recouvrement de sol (2') présente des languettes de guidage (14, 15) qui, lors de l'assemblage du recouvrement de sol (2') avec la plaque de support (9), ont prise dans des zones de guidage (40) de la plaque de support (9) et **en ce qu'**un mouvement (P1), notamment linéaire, de la plaque de support (9) par rapport au recouvrement de sol (2') est guidé par les languettes de guidage (14, 15).

13. Agencement selon la revendication 13, **caractérisé en ce que** les languettes de guidage (14, 15) ont prise par le haut par-dessus une cavité de logement de languette (40) pendant un mouvement relatif entre la plaque de support (9) et le recouvrement de sol (2') et **en ce que**, dans la position finale du recouvrement de sol (2') et de la plaque de support (9), la languette de guidage (14, 15) est disposée en ayant prise dans la cavité de logement de languette (40).

14. Plaque de cuisson à induction (1) comprenant un agencement selon l'une quelconque des revendications précédentes.
